# EUROPÄISCHE PATENTSCHRIFT

(11) **EP 4 272 850 B1**
(45) Veröffentlichungstag und Bekanntmachung des Hinweises auf die Patenterteilung: **04.12.2024**
(21) Anmeldenummer: 23157492.2
(22) Anmeldetag: 20.02.2023
(51) Int. Cl.: B01D 1/14, F26B 17/00, F26B 17/28, F26B 25/12

(54) **TROCKNUNGSVORRICHTUNG**
DRYING DEVICE
DISPOSITIF DE SÉCHAGE

(30) Priorität: 06.05.2022 DE 202022102483 U
(43) Veröffentlichungstag der Anmeldung: 08.11.2023
(73) Patentinhaber: Fliegl Agrartechnik GmbH, 84453 Mühldorf am Inn (DE)
(72) Erfinder: FLIEGL, Josef jun., 84453 Mühldorf am Inn (DE)
(74) Vertreter: Tetzner, Michael

(56) Entgegenhaltungen:
- EP-A1- 3 163 239
- EP-A1- 3 767 212
- EP-B2- 2 096 394
- DD-A5- 288 211
- JP-U- S5 690 694
- JP-U- S56 103 193

## Beschreibung

Die Erfindung betrifft eine Trocknungsvorrichtung für eine Mischung aus einer Flüssigkeit und einem oder mehreren Feststoffen.

Beispielsweise in der Landwirtschaft oder bei der Erzeugung von Biogas entstehen erhebliche Mengen von Mischungen aus Flüssigkeiten und Feststoffen, beispielsweise (Klär-)Schlamm, Gülle oder Gärreste, die transportiert, entsorgt und/oder verarbeitet werden müssen. Um insbesondere Transport- und Lagerungskosten für diese Mischungen möglichst gering zu halten, ist es bekannt, diese einzudicken, indem gezielt der Flüssigkeitsanteil in den Mischungen reduziert wird. Dies kann beispielsweise durch eine zumindest teilweise Verdunstung dieses Flüssigkeitsanteils erreicht werden.

Für eine Eindickung durch teilweise Verdunstung des Flüssigkeitsanteils einer Mischung kann beispielsweise eine gattungsgemäße Trocknungsvorrichtung genutzt werden, die einen Aufnahmebehälter zur Aufnahme der Mischung, einen mit einem Abschnitt seines Umfangs in dem Aufnahmebehälter angeordneten Rotor sowie eine Antriebsvorrichtung zum rotierenden Antreiben des Rotors umfasst. Eine solche Trocknungsvorrichtung ist beispielsweise aus der DE 10 2016 105 538 A1 bekannt. Bei der dortigen Trocknungsvorrichtung ist der Rotor mit einer Mehrzahl von flächigen Mitnahmelementen ausgestattet, die eine radiale oder eine zur Radialen geneigte Ausrichtung bezüglich der Rotationsachse des Rotors aufweisen, wobei zumindest einige und vorzugsweise sämtliche der Mitnahmeelemente mit einer Mehrzahl von Durchgangsöffnungen versehen sind. Infolge der Rotation des Rotors tauchen kontinuierlich einzelne der Mitnahmeelemente in die einzudickende Mischung ein und nehmen einen Teil davon mit, wobei die an den Mitnahmeelementen hängende Mischung auf dem Abschnitt des Umfangs des Rotors, der nicht in die Mischung eingetaucht ist, einer erhöhten Verdunstungswirkung ausgesetzt ist, die auf die großflächige und dünnschichtige Verteilung auf den Mitnahmeelementen zurückzuführen ist. Erheblich unterstützt wird diese Verdunstungswirkung noch durch die Beaufschlagung der an den Mitnahmeelementen hängenden Mischung mit einem von einem Gebläse erzeugten Luftstrom, der zudem erhitzt sein kann.

Zur Erzeugung des Trocknungsgasstrom ist an einer Seite des Gestells auf Höhe des außerhalb des Aufnahmebehälters befindlichen Abschnitts des Rotors eine Vorrichtung an dem Gestell 1 befestigt, die ein oder mehrere Gebläse sowie ggf. einen Wärmetauscher umfasst. Mittels des wenigstens einen Gebläses wird der Trocknungsgasstrom erzeugt, der in etwa senkrecht bezüglich der Rotationsachse des Rotors ausgerichtet ist und somit den außerhalb des Aufnahmebehälters befindlichen Abschnitt des Rotors quer zu dessen Rotationsachse durchströmt und auf der Rückseite über eine Öffnung abgeführt wird.

Der Betrieb der Trocknungsvorrichtung erfordert immer wieder Reinigungs-, Wartungs- und/oder Reparaturarbeiten an den Gebläsen, den vorhandenen Wärmetauscher, am Rotor und/oder im Inneren des Aufnahmebehälters. Die Zugänglichkeit ist jedoch durch die Gebläse und den Wärmetauscher relativ eingeschränkt bzw. mit einem erhöhten Aufwand verbunden, da die Gebläse und der Wärmetauscher demontiert werden müssen, wenn Arbeiten am Rotor oder im Inneren des Aufnahmebehälters erforderlich sind.

Bei der Trocknungsvorrichtung der JP S56 90694 U ist die Auslassöffnung in einem Klapprahmen angeordnet, der von einer Schließstellung in eine Öffnungsstellung verschwenkbar ist. Eine ähnliche Ausgestaltung ist aus der JP S56 103193 U bekannt. Weiterhin offenbart die DD 288 211 A5 einen Trommeltrockner mit einer Beladetür und einer gegenüberliegenden Entladetür, die jeweils geöffnet und geschlossen werden können.

Weiterhin offenbart EP 3 163 239 A1 eine Trocknungsvorrichtung gemäß dem Stand der Technik.

Der Erfindung liegt daher die Aufgabe zugrunde, die Reinigungs-, Wartungs- und Reparaturarbeiten an der Trocknungsvorrichtung zu erleichtern.

Diese Aufgabe wird mittels einer Trocknungsvorrichtung gemäß dem Anspruch 1 gelöst. Vorteilhafte Ausgestaltungen der erfindungsgemäßen Trocknungsvorrichtung sind Gegenstände der abhängigen Ansprüche und ergeben sich aus der nachfolgenden Beschreibung der Erfindung.

Die erfindungsgemäße Trocknungsvorrichtung für eine Mischung aus einer Flüssigkeit und einem oder mehreren Feststoffen weist ein Gestell, einen im Gestell angeordneten Aufnahmebehälter mit einem Einlass und einem Auslass für die Mischung und einen am Gestell rotierbar gelagerten und mit einem Abschnitt seines Umfangs in dem Aufnahmebehälter angeordneten Rotor mit einer Mehrzahl von flächigen Mitnahmeelementen auf. Der Rotor wird über eine Antriebsvorrichtung rotierend um eine Rotorachse angetrieben. Das Gestell ist zumindest in dem Bereich oberhalb des Aufnahmebehälters nach Art eines Gehäuses geschlossen ausgebildet und sieht auf einer parallel zur Rotorachse ausgerichteten Seite wenigstens eine Zuströmöffnung zur Durchströmung des Gehäuses mit einem Trocknungsgasstrom vor, wobei die wenigstens eine Zuströmöffnung in einem Klapprahmen angeordnet ist, der zur Überprüfung, Montage, Reparatur oder Reinigung der Trocknungsvorrichtung von einer Schließstellung in eine Öffnungsstellung verschwenkbar ist. Weiterhin ist auf einer Außenseite des Klapprahmens im Bereich der wenigstens einen Zuströmöffnung wenigstens ein Gebläse montiert und im Klapprahmen ist wenigstens ein Wärmetauscher vorgesehen, der im Strömungsweg des Trocknungsgasstroms montiert ist. Der Klapprahmen ist ferner als Doppelklapprahmen mit einem ersten Klapprahmenteil zur Halterung des wenigstens einen Gebläses und einem zweiten Klapprahmenteil zur Halterung des Wärmetauschers ausgebildet ist.

Das an der wenigstens einen Zuströmöffnung angeschlossene Gebläse kann mit Hilfe des Klapprahmens auf einfache Art und Weise weggeschwenkt werden, um so einen unkomplizierten und schnellen Zugang zum Aufnahmebehälter und/oder Rotor zu ermöglichen.

Gemäß einer bevorzugten Ausgestaltung der Erfindung gibt der Klapprahmen in der Öffnungsstellung eine Montage- und Reinigungsöffnung im Gestell mit einer lichten Breite (in Richtung der Rotationsachse) frei, die größer als die Länge der Mitnahmeelemente in Richtung der Rotationsachse ist. Außerdem ist der Klapprahmen zweckmäßigerweise um wenigstens 90° verschwenkbar. Dadurch wird eine Entnahme bzw. ein Austausch der langen Mitnahmeelemente erheblich vereinfacht. Idealerweise sind die einzelnen Mitnahmeelemente lediglich in zugehörigen Führungsschienen am Rotor eingeschoben und gesichert und können so schnell eingesetzt oder herausgenommen werden.

Durch die Montage des Gebläses auf der Außenseite des Klapprahmens im Bereich der wenigstens einen Zuströmöffnung ist dieses Gebläse durch Öffnen des Klapprahmens auch von der anderen (Innen-)Seite für Wartungs- bzw. Reparaturarbeiten zugänglich.

Gemäß einer weiteren Ausgestaltung der Erfindung ist es besonders vorteilhaft, wenn der erste Klapprahmenteil einzeln oder zusammen mit dem zweiten Klapprahmenteil um wenigstens 90° verschwenkbar angeordnet ist, sodass wahlweise die am ersten Klapprahmenteil montierten Gebläse oder der am zweiten Klapprahmenteil montierte Wärmetauscher von beiden Seiten inspiziert werden kann, sodass Reinigungs- oder Wartungsarbeiten schnell und effektiv durchgeführt werden können. Sind hingegen Arbeiten am Rotor oder im Inneren des Aufnahmebehälters erforderlich, können beide Klapprahmen auch gemeinsam in die Öffnungsstellung verschwenkt werden.

In einem bevorzugten Ausführungsbeispiel weist der erste Klapprahmenteil eine erste Schwenkachse und der zweite Klapprahmenteil eine zweite Schwenkachse auf, die parallel zueinander angeordnet sind, dabei kann dann der zweite Klapprahmenteil um die zweite Schwenkachse unmittelbar oder mittelbar am Gestell schwenkbar gehaltert sein, während der erste Klapprahmenteil schwenkbar um die erste Schwenkachse am zweiten Klapprahmenteil gelagert ist.

Sind Arbeiten im Bereich des Aufnahmebehälters bzw. Rotors erforderlich, reicht es somit aus, wenn die beiden Klapprahmenteile gemeinsam um die zweite Schenkachse in die Öffnungsstellung verschwenkt werden. Sind hingegen Arbeiten lediglich an den Gebläsen oder an der Vorderseite des Wärmetauschers zu erledigen, reicht es aus, wenn nur der erste Klapprahmen geöffnet und um die erste Schwenkachse geschwenkt wird.

Die Erfindung wird nachfolgend anhand eines in den Zeichnungen dargestellten Ausführungsbeispiels näher erläutert. In den Zeichnungen zeigt:
Fig. 1: die erfindungsgemäße Trocknungsvorrichtung in einer Ansicht von der Seite;
Fig. 2: die Trocknungsvorrichtung mit geschlossenen Klapprahmen in einer ersten perspektivischen Ansicht,
Fig. 3: die Trocknungsvorrichtung mit geöffneten Klapprahmen in einer zweiten perspektivischen Ansicht und
Fig. 4: die Trocknungsvorrichtung mit geöffneten Klapprahmen in einer Aufsicht.

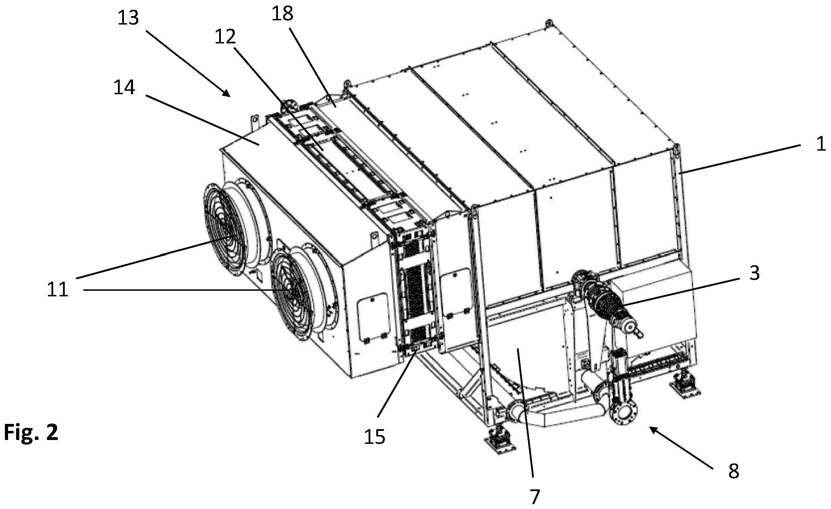

Die in den Zeichnungen dargestellte Trocknungsvorrichtung umfasst ein Gestell 1, innerhalb dessen ein Rotor 2 drehbar gelagert ist. Ein rotierender Antrieb des Rotors 2 kann mittels einer Antriebsvorrichtung 3 (vgl. Fig. 2) erfolgen, die beispielsweise einen Elektromotor umfassen kann, der direkt oder unter Zwischenschaltung eines Übersetzungsgetriebes auf eine zentrale Antriebswelle 4, deren Längsachse der Rotationsachse 5 des Rotors 2 entspricht, wirken kann.

Das Gestell 1 integriert weiterhin einen Aufnahmebehälter 6, der einen halbschalenförmigen Behältermantel 6a aufweist, dessen zwei (längsaxiale) Enden mittels Begrenzungswänden 7 verschlossen sind (Fig. 2). Der Aufnahmebehälter 6 ist unterhalb (bezogen auf die Schwerkraftrichtung in einer vorgesehenen Betriebsstellung der Trocknungsvorrichtung) des Rotors 2 positioniert, wobei der Rotor 2 teilweise, vorzugsweise etwa zur Hälfte innerhalb des Aufnahmebehälters 6 angeordnet ist.

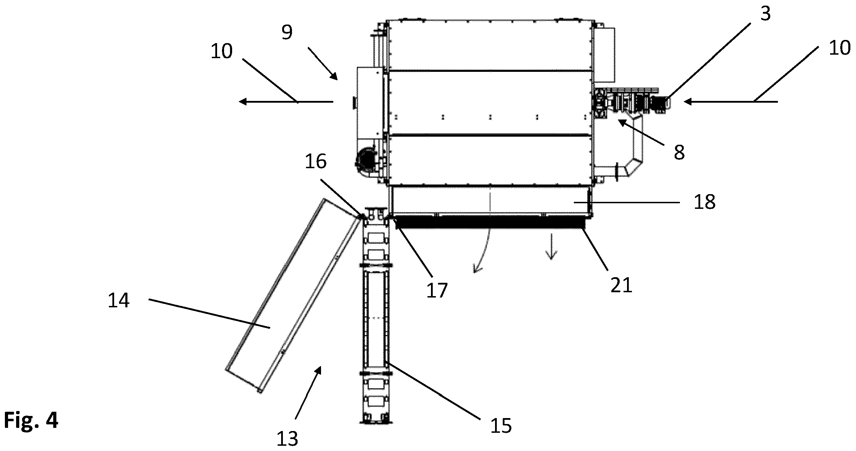

Das von dem Aufnahmebehälter 6 begrenzte Innenvolumen ist fluidleitend mit einem Einlass 8 und einem Auslass 9 verbunden, über die eine Mischung 10 aus einer Flüssigkeit und einem oder mehreren Feststoffen zu- und abgeführt werden kann. Der Einlass 8 dient dem Zuführen neuer, noch einzudickender Mischung 10, während die mittels der erfindungsgemäßen Trocknungsvorrichtung eingedickte Mischung 10 über den Auslass 9 abgeführt werden kann (Fig. 4). Der Einlass 8 und der Auslass 9 sind dabei entlang der Rotationsachse 5 des Rotors 2 voneinander beabstandet und sich gegenüberliegend in den Begrenzungswänden 7 des Aufnahmebehälters 6 integriert. Zum Zu- und Abführen der Mischung 10 können ein oder mehrere (nicht dargestellte) Pumpen beziehungsweise Fördervorrichtungen vorgesehen sein.

An einer Seite des Gestells 1 ist auf Höhe des außerhalb des Aufnahmebehälters 6 befindlichen Abschnitts des Rotors 2 eine Vorrichtung an dem Gestell 1 befestigt, die eine Mehrzahl von Gebläsen 11 (hier konkret zwei) sowie einen Wärmetauscher 12 umfasst. Mittels der Gebläse 11, die beispielsweise elektromotorisch angetrieben sein können, kann eine Luftströmung erzeugt werden, die in etwa senkrecht bezüglich der Rotationsachse 5 des Rotors 2 ausgerichtet ist und somit den außerhalb des Aufnahmebehälters 5 befindlichen Abschnitt des Rotors 2 quer zu dessen Rotationsachse 5 durchströmt und auf der Rückseite über eine nicht dargestellte Öffnung abgeführt wird. Dabei durchströmt die Luftströmung zuvor noch den Wärmetauscher 12, wodurch diese durch einen Übergang von Wärmeenergie von einem innerhalb des Wärmetauschers 12 geführten und beispielsweise von einer Umwälzpumpe (nicht dargestellt) durch den Wärmetauscher 12 geförderten Wärmetauschermedium erwärmt wird.

Die Gebläse 11 und der Wärmetauscher 12 sind an einem Klapprahmen 13 gehaltert, der als Doppelklapprahmen mit einem ersten Klapprahmenteil 14 zur Halterung der beiden Gebläse 11 und einem zweiten Klapprahmenteil 15 zur Halterung des Wärmetauschers 12 ausgebildet ist. Der erste Klapprahmenteil 14 ist dabei um eine erste Schwenkachse 16 am zweiten Klapprahmenteil 15 gehaltert, während der zweite Klapprahmenteil 15 um eine zweite Schwenkachse 17 an einem Rahmenteil 18 des Gestells schwenkbar gelagert ist. Um eine möglichst gerichtete Durchströmung des Rotors 2 zu erreichen, kann der Rahmenteil 18 des Gehäuse 13 vorzugsweise auch eine strömungsleitende Funktionalität aufweisen.

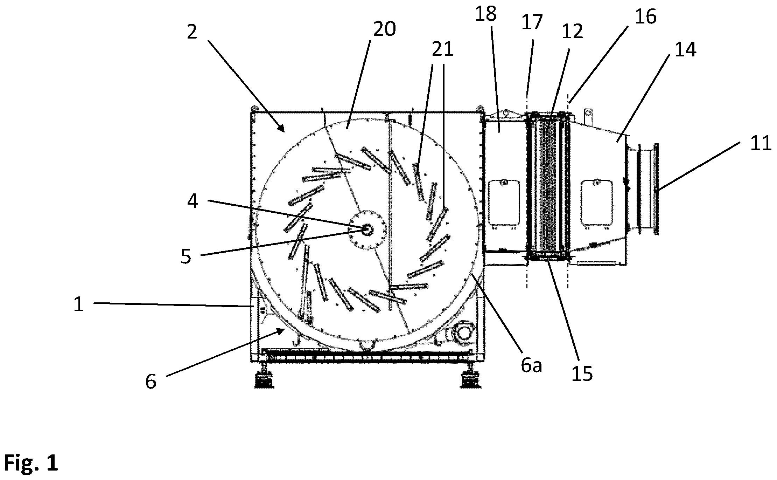

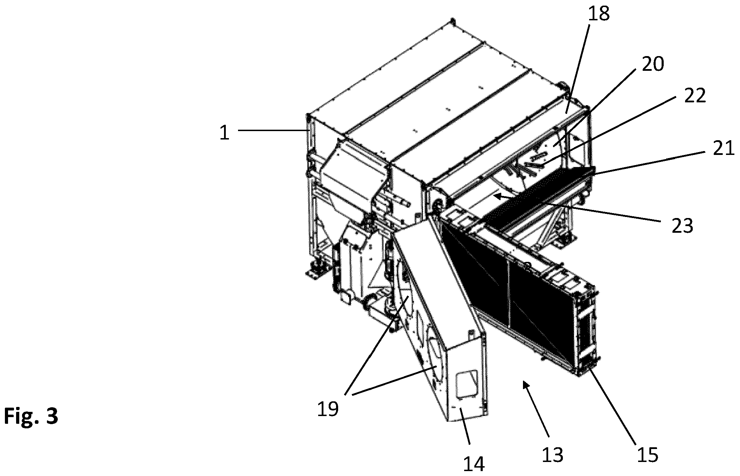

Der erste Klapprahmenteil 14 ist einzeln oder zusammen mit dem zweiten Klapprahmenteil 15 um wenigstens 90° zwischen einer Schließstellung (Fig. 1, 2) und einer Öffnungsstellung (Fig.3, 4) verschwenkbar, sodass wahlweise die am ersten Klapprahmenteil 14 montierten Gebläse 11 oder der am zweiten Klapprahmenteil 15 montierte Wärmetauscher 12 von beiden Seiten inspiziert und etwaige Reinigungs- oder Wartungsarbeiten schnell und effektiv durchgeführt werden können. Sind hingegen Arbeiten am Rotor 2 oder im Inneren des Aufnahmebehälters 6 erforderlich können beide Klapprahmen 14, 15 auch gemeinsam in die Öffnungsstellung verschwenkt werden.

In den Fig. 3 und 4 sind die Gebläse 11 aus Gründen der Übersichtlichkeit nicht dargestellt. Man erkennt aber in Fig.3 zwei Zuströmöffnungen 19 in deren Bereich die beiden Gebläse 11 auf der Außenseite des ersten Klapprahmenteils 14 montiert werden (Fig. 1 und 2).

Der Rotor 2 umfasst zwei Stirnwände 20, die ein Innenvolumen des Rotors 2 stirnseitig begrenzen und die mittels einer Mehrzahl von in gleichmäßiger Teilung über dem Außenumfang des Rotors 2 verteilten, plattenförmigen Mitnahmeelementen 21, die bezüglich der Rotationsachse 5 in Drehrichtung des Rotors 2 zur Radialen geneigt ausgerichtet sind (vgl. insbesondere Fig. 1), miteinander verbunden sind. Die plattenförmigen Mitnahmeelemente 21 sind vorzugsweise rechteckig ausgebildet, wobei deren parallel zur Rotorachse 5 verlaufenden Längsseiten ein Vielfaches länger als die Breite der Mitnahmeelemente 21 ist.

Durch die vergleichsweise große Gesamtfläche, die von den plattenförmigen Mitnahmeelementen 21 in Summe ausgebildet wird und die für ein Mitnehmen der einzudickenden Mischung 10 zur Verfügung steht sowie von der Luftströmung umströmt werden, kann eine entsprechend gute Trocknungs- beziehungsweise Verdunstungswirkung für den Flüssigkeitsanteil der Mischung 10 erzielt werden.

Im Betrieb der Trocknungsvorrichtung wird der Rotor 2 mittels der Antriebsvorrichtung 3 rotierend angetrieben, wodurch kontinuierlich ein anderer Abschnitt des Rotors 2 in die innerhalb des Aufnahmebehälters 6 aufgenommene Mischung 10 eingetaucht wird und die so mit der Mischung 10 benetzten Mitnahmeelemente 15 anschließend entlang des nicht in dem Aufnahmebehälter 6 befindlichen Abschnitts des Umfangs des Rotors 2 bewegt werden, wobei diese mittels der erwärmten Luftströmung um- und durchströmt werden, wodurch ein Anteil der Flüssigkeit in der Mischung 10 verdunstet. Dadurch wird die gewünschte Eindickung der innerhalb des Aufnahmebehälters 6 enthaltenen Charge der Mischung 10 erreicht. Dies erfolgt solange, bis die in dem Aufnahmebehälter 6 enthaltene Charge der Mischung 10 eine definierte Konsistenz beziehungsweise Viskosität erreicht hat. Dann kann die entsprechende Charge der Mischung 10 über den Auslass 9 aus dem Aufnahmebehälter 6 abgeführt und eine neue Charge über den Einlass 8 zugeführt werden, die dann in entsprechender Weise durch einen Betrieb der Trocknungsvorrichtung eingedickt werden kann.

Weiterhin kann durch eine Ausgestaltung der Mitnahmeelemente 21 mit einer Mehrzahl von Durchgangsöffnungen erreicht werden, dass die zur Trocknung der Mischung 10 vorgesehene Gasströmung nicht nur die zwischen den Mitnahmeelementen 21 ausgebildeten Zwischenräume sondern auch die Mitnahmeelemente 21 selbst und dadurch auch die an diesen haftende Mischung 10 durchströmen kann, wodurch ebenfalls im Vergleich zu nicht durchströmbaren Mitnahmeelementen die Trocknungswirkung der Trocknungsvorrichtung erheblich verbessert werden kann. Bezüglich der weiteren Ausgestaltungsmöglichkeiten des Rotors 2 und der Mitnahmeelemente 21 wird hiermit ausdrücklich auf DE 10 2016 105 538 A1 verwiesen.

Die Ermittlung der zu erreichenden Konsistenz beziehungsweise Viskosität der Mischung 10 kann beispielsweise durch ein Unterschreiten einer definierten Füllhöhe der Mischung 10 innerhalb des Aufnahmebehälters 6 ermittelt werden. Zur Ermittlung der Füllhöhe kann die Trocknungsvorrichtung eine entsprechende (nicht dargestellte) Füllstandsmesseinrichtung, die beispielsweise eine Radarvorrichtung umfassen kann, aufweisen. Eine Ermittlung der Füllhöhe beziehungsweise der zu erreichenden Konsistenz kann alternativ oder zusätzlich auf einem Wiegen des Aufnahmebehälters 6 oder der in dem Aufnahmebehälter 6 enthaltenen Mischung 10 beruhen. Der Betrieb der Trocknungsvorrichtung einschließlich des Zu- und Abführens der verschiedenen Chargen der Mischung 10 und gegebenenfalls einer Unterbrechung des rotierenden Antriebs des Rotors 2 während des Chargenwechsels kann dadurch automatisiert ablaufen.

Die in dem Wärmetauscher 12 auf die Luftströmung übertragene Wärmeenergie stellt vorzugsweise Abwärme aus einem weiterhin bevorzugt in der Nähe der Trocknungsvorrichtung durchgeführten exothermen Prozess, wie beispielsweise der Verbrennung von Biogas oder einem anderen Brennstoff zur Strom- und/oder Wärmeerzeugung, dar.

Aus Fig. 3 ist ersichtlich, dass zur Halterung der Mitnahmeelemente 21 auf den gegenüberliegenden Flächen der beiden Stirnwände 20 Führungsschienen 22 angeordnet sind, in welche die Mitnahmeelement 21 eingesteckt und gesichert werden können. Fig. 3 zeigt ein solches Mitnahmeelement 21 kurz vor der Montage. Der Rahmenteil 18 des Gestells 1 gibt hierfür bei geöffnetem Klapprahmen 13 (Fig. 3) eine Montage- und Reinigungsöffnung 23 frei, deren lichte Breite größer als die Länge der Mitnahmeelemente 21 ist, sodass die Mitnahmeelemente 21 problemlos über die Montage- und Reinigungsöffnung 23 zugeführt und in die zugehörigen Führungsschienen 22 eingesteckt und gesichert werden können. Entsprechend können die Mitnahmeelemente 21 auch sehr einfach über die Montage- und Reinigungsöffnung 23 herausgenommen werden.

Der Klapprahmen 13 ermöglicht so einen einfachen Zugang für Arbeiten im Bereich des Aufnahmebehälters 6 bzw. Rotors 2, darüber hinaus sind Wartungs- und Reparaturarbeiten am Gebläse 11 und am Wärmetauscher durch die beiden Klapprahmenteile 14, 15 sowohl auf der Vorder- als auch auf der Rückseite möglich.

## Patentansprüche

1. Trocknungsvorrichtung für eine Mischung (10) aus einer Flüssigkeit und einem oder mehreren Feststoffen mit
- einem Gestell (1),
- einem im Gestell (1) angeordneten Aufnahmebehälter (6), der einen Einlass (8) und einen Auslass (9) für die Mischung (10) aufweist,
- einem am Gestell (1) rotierbar gelagerten und mit einem Abschnitt seines Umfangs in dem Aufnahmebehälter (6) angeordneten Rotor (2), der eine Mehrzahl von flächigen Mitnahmeelementen (21) aufweist,
- einer Antriebsvorrichtung (3) zum rotierenden Antreiben des Rotors (2) um eine Rotorachse (5),
- wobei das Gestell (1) zumindest in dem Bereich oberhalb des Aufnahmebehälters (6) nach Art eines Gehäuses geschlossen ausgebildet ist und auf einer parallel zur Rotorachse (5) ausgerichteten Seite wenigstens eine Zuströmöffnung (19) zur Durchströmung des Gehäuses mit einem Trocknungsgasstrom vorgesehen ist,
**dadurch gekennzeichnet, dass** die wenigstens eine Zuströmöffnung (19) in einem Klapprahmen (13) angeordnet ist, der zur Überprüfung, Montage, Reparatur oder Reinigung der Trocknungsvorrichtung von einer Schließstellung in eine Öffnungsstellung verschwenkbar ist, wobei
- auf einer Außenseite des Klapprahmens (13) im Bereich der wenigstens einen Zuströmöffnung (19) wenigstens ein Gebläse (11) montiert ist,
- ferner wenigstens ein Wärmetauscher (12) im Klapprahmen (13) vorgesehen ist, der im Strömungsweg des Trocknungsgasstroms montiert ist und
- der Klapprahmen (13) als Doppelklapprahmen mit einem ersten Klapprahmenteil (14) zur Halterung des wenigstens einen Gebläses (11) und einem zweiten Klapprahmenteil (15) zur Halterung des Wärmetauschers (12) ausgebildet ist.

2. Trocknungsvorrichtung gemäß Anspruch 1, **dadurch gekennzeichnet, dass** der Klapprahmen (13) in der Öffnungsstellung eine Montage- und Reinigungsöffnung (23) im Gestell (1) mit einer lichten Breite freigibt, die größer als die Länge der Mitnahmeelemente (21) in Richtung der Rotationsachse (5) ist.

3. Trocknungsvorrichtung gemäß Anspruch 1, **dadurch gekennzeichnet, dass** der Klapprahmen (13) um wenigstens 90° verschwenkbar ist.

4. Trocknungsvorrichtung gemäß Anspruch 1, **dadurch gekennzeichnet, dass** der erste Klapprahmenteil (14) einzeln oder zusammen mit dem zweiten Klapprahmenteil (15) um wenigstens 90° verschwenkbar angeordnet ist.

5. Trocknungsvorrichtung gemäß Anspruch 1, **dadurch gekennzeichnet, dass** der erste Klapprahmenteil (14) eine erste Schwenkachse (16) und der zweite Klapprahmenteil (15) eine zweite Schwenkachse (17) aufweisen, die parallel zueinander ausgerichtet sind.

6. Trocknungsvorrichtung gemäß Anspruch 5, **dadurch gekennzeichnet, dass** der zweite Klapprahmenteil (15) um die zweite Schwenkachse (17) mittelbar oder unmittelbar am Gestell (1) schwenkbar gehaltert ist und der erste Klapprahmenteil (14) schwenkbar um die erste Schwenkachse (16) am zweiten Klapprahmenteil (15) gelagert ist.

## Claims

1. A drying device for a mixture (10) of a liquid and one or more solids, comprising
- a frame (1),
- a receiving container (6), which is arranged in the frame (1) and comprises an inlet (8) and an outlet (9) for the mixture (10),
- a rotor (2), which is rotatably mounted on the frame (1), is arranged with a portion of its circumference in the receiving container (6), and comprises a plurality of flat entraining elements (21),
- a drive device (3) for rotatably driving the rotor (2) about a rotor shaft (5),
- the frame (1) being configured to be closed, in the manner of a housing, at least in the region above the receiving container (6) and at least one inflow opening (19) for a drying gas stream to flow through the housing is provided on a side oriented in parallel with the rotor shaft (5),
**characterized in that** the at least one inflow opening (19) is arranged in a hinged frame (13), which is pivotable from a closed position into an open position for checking, mounting, repairing, or cleaning the drying device,
- at least one fan (11) being mounted on an outer side of the hinged frame (13) in the region of the at least one inflow opening (19),
- at least one heat exchanger (12), which is mounted in the flow path of the drying gas stream, further being provided in the hinged frame (13), and
- the hinged frame (13) is configured as a double hinged frame comprising a first hinged frame part (14) for holding the at least one fan (11) and a second hinged frame part (15) for holding the heat exchanger (12).

2. The drying device according to claim 1, **characterized in that** in the open position, the hinged frame (13) opens a mounting and cleaning opening (23) in the frame (1) with a clear width that is greater than the length of the entraining elements (21) in the direction of the rotational shaft (5).

3. The drying device according to claim 1, **characterized in that** the hinged frame (13) is pivotable by at least 90°.

4. The drying device according to claim 1, **characterized in that** the first hinged frame part (14) is arranged to be pivotable by at least 90° individually or together with the second hinged frame part (15).

5. The drying device according to claim 1, **characterized in that** the first hinged frame part (14) has a first pivot axis (16) and the second hinged frame part (15) has a second pivot axis (17), which axes are oriented in parallel with one another.

6. The drying device according to claim 5, **characterized in that** the second hinged frame part (15) is held indirectly or directly on the frame (1) so as to be pivotable about the second pivot axis (17) and the first hinged frame part (14) is mounted on the second hinged frame part (15) so as to be pivotable about the first pivot axis (16).

## Revendications

1. Dispositif de séchage pour un mélange (10) se composant d'un liquide et d'une ou de plusieurs matières solides, ledit dispositif de séchage comprenant :
- un bâti (1),
- un conteneur de réception (6) disposé dans le bâti (1), lequel conteneur de réception présente une entrée (8) et une sortie (9) pour le mélange (10),
- un rotor (2) monté en rotation sur le bâti (1) et disposé en ayant une partie de sa circonférence dans le conteneur de réception (6), lequel rotor présente une pluralité d'éléments d'entraînement plats (21),
- un dispositif d'entraînement (3) servant à l'entraînement rotatif du rotor (2) autour d'un axe (5) du rotor,
- où le bâti (1), au moins dans la zone se trouvant au-dessus du conteneur de réception (6), est conçu en étant fermé à la façon d'un boîtier, et, sur un côté orienté parallèlement à l'axe (5) du rotor, il est prévu au moins une ouverture d'alimentation (19) permettant à un flux de gaz de séchage de s'écouler à travers le boîtier,
**caractérisé en ce que** l'ouverture d'alimentation (19) au moins au nombre de un est disposée dans un cadre pliant (13) qui, pour le contrôle, le montage, la réparation ou le nettoyage du dispositif de séchage, peut pivoter, passant d'une position de fermeture à une position d'ouverture, où :
- au moins un ventilateur (11) est monté sur un côté extérieur du cadre pliant (13) dans la zone de l'ouverture d'alimentation (19) au moins au nombre de un,
- il est prévu en outre, dans le cadre pliant (13), au moins un échangeur de chaleur (12) qui est monté dans le trajet d'écoulement du flux de gaz de séchage, et
- le cadre pliant (13) est conçu comme un cadre pliant double comprenant une première partie de cadre pliant (14) servant à maintenir le ventilateur (11) au moins au nombre de un et comprenant une seconde partie de cadre pliant (15) servant à maintenir l'échangeur de chaleur (12).

2. Dispositif de séchage selon la revendication 1, **caractérisé en ce que** le cadre pliant (13), en position d'ouverture, dégage une ouverture de montage et de nettoyage (23) placée dans le bâti (1), ladite ouverture ayant une largeur libre qui est plus grande que la longueur des éléments d'entraînement (21) en direction de l'axe de rotation (5).

3. Dispositif de séchage selon la revendication 1, **caractérisé en ce que** le cadre pliant (13) peut pivoter d'au moins 90°.

4. Dispositif de séchage selon la revendication 1, **caractérisé en ce que** la première partie de cadre pliant (14) est disposée en pouvant pivoter, seule ou de façon conjointe avec la seconde partie de cadre pliant (15), d'au moins 90°.

5. Dispositif de séchage selon la revendication 1, **caractérisé en ce que** la première partie de cadre pliant (14) présente un premier axe de pivotement (16) et la seconde partie de cadre pliant (15) présente un second axe de pivotement (17), lesdits premier et second axes de pivotement étant orientés parallèlement l'un à l'autre.

6. Dispositif de séchage selon la revendication 5, **caractérisé en ce que** la seconde partie de cadre pliant (15) est maintenue en pouvant pivoter autour du second axe de pivotement (17), indirectement ou directement sur le bâti (1), et la première partie de cadre pliant (14) est montée en pouvant pivoter autour du premier axe de pivotement (16) placé sur la seconde partie de cadre pliant (15).
